# EUROPÄISCHE PATENTSCHRIFT

(11) **EP 1 048 434 B1**
(45) Veröffentlichungstag und Bekanntmachung des Hinweises auf die Patenterteilung: **29.01.2003**
(21) Anmeldenummer: 00107827.8
(22) Anmeldetag: 12.04.2000
(51) Int. Cl.: B29C 47/90

(54) **Kalibrierhülse mit variabler Durchmessereinstellung**
Calibrating sleeve having adjustable diameter
Manchon de calibrage à diamètre réglable

(30) Priorität: 21.04.1999 DE 19918148
(43) Veröffentlichungstag der Anmeldung: 02.11.2000
(73) Patentinhaber: CONPRO GmbH, D-32602 Vlotho (DE)
(72) Erfinder: Büsching, Dieter, 32602 Vlotho (DE); Neumann, Ulrich, 32549 Bad Oeynhausen (DE); Junk, Oliver, 32457 Porta Westfalica (DE)
(74) Vertreter: Müller, Karl-Ernst, Dr., Dipl.-Ing.

(56) Entgegenhaltungen:
- WO-A-96/36475
- DE-A- 3 412 619
- DE-A- 3 521 321
- DE-A- 19 843 340
- DE-B- 1 184 941
- DE-U- 20 000 872
- US-A- 3 958 913

## Beschreibung

Die Erfindung betrifft eine Kalibrierhülse für den Einsatz in einer Extrudieranlage für Kunststoffrohre mit einer Einrichtung zum stufenlosen Einstellen ihres Innendurchmessers.

Eine Kalibrierhülse mit den vorgenannten Merkmalen ist in der WO 96/36475 beschrieben. Die bekannte Kalibrierhülse besteht aus einer Anzahl von gegeneinander verspannten, in Axialrichtung der Kalibrierhülse geschlitzten Einzelringen, so daß über das Zusammenziehen der Einzelringe mittels einer sich über die Länge der Kalibrierhülse erstreckenden Einstellvorrichtung der Innendurchmesser der Kalibrierhülse auch während des Extrusionsprozesses geändert bzw. stufenlos eingestellt werden kann.

Mit der bekannten Kalibrierhülse ist der Nachteil verbunden, daß die Herstellung der aus den Einzelringen zusammengesetzten Kalibrierhülse aufwendig ist; auch die zugeordnete und auf alle Einzelringe gleichzeitig einwirkende Einstellvorrichtung bedeutet einen erheblichen Aufwand in Herstellung und in ihrer Justierung auf die Einzelringe. Da weiterhin zur Vermeidung eines stufenförmigen Verlaufs des Innendurchmessers der Kalibrierhülse und damit eines stufenförmigen Verlaufs im Durchmesser des zu extrudierenden Rohres alle Einzelringe jeweils gleichzeitig und mit großer Präzision gleichmäßig in ihrem Durchmesser eingestellt werden müssen, ist die Handhabung der bekannten Kalibrierhülse im Betrieb aufwendig.

Der Erfindung liegt daher die Aufgabe zugrunde, eine Kalibrierhülse der eingangs genannten Art zur Verfügung zu stellen, die einfach aufgebaut, preiswert herstellbar und einfach handhabbar ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß die als einheitlicher rohrförmiger Körper ausgebildete Kalibrierhülse wenigstens einen sich in ihrer Axialrichtung über wenigstens einen Teilabschnitt erstreckenden Schlitz aufweist und die Wandung der Kalibrierhülse an ihrem Austrittsende für das extrudierte Rohr einen sich in Abzugsrichtung des Rohres verengenden Konus aufweist, auf dem ein einen vorgegebenen Durchmesser aufweisender Ring gleitend verstellbar angeordnet ist. Mit der Erfindung ist der Vorteil verbunden, daß die einen oder mehrere Schlitze aufweisende, im übrigen aber aus einem an sich bekannten Rohrkörper herkömmlicher Ausbildung bestehende Kalibrierhülse ohne besonderen Aufwand herstellbar ist; auch die nachträgliche Bearbeitung bzw. Nachrüstung bereits gefertigter oder im Einsatz befindliche Kalibrierhülsen ist ohne weiteres möglich. Da der Ring als Einstellvorrichtung für den Innendurchmesser der Kalibrierhülse bei seiner Bewegung auf dem Konus die Kalibrierhülse symmetrisch und konzentrisch zusammenzieht, ist hinsichtlich der Einstellung des Innendurchmessers der Kalibrierhülse eine einfache Handhabung verwirklicht, wobei sich der Innendurchmesser der Kalibrierhülse zu deren Austrittsende für das extrudierte Rohr hin stufenlos verändern läßt.

Nach einem Ausführungsbeispiel der Erfindung ist vorgesehen, daß zur Verstellung des Ringes auf dem Konus der Kalibrierhülse ein Antrieb vorgesehen ist, wobei nach einem zweckmäßigen Ausführungsbeispiel der Erfindung als mechanischer Antrieb für die Verstellung des Ringes parallel zur Kalibrierhülse angeordnete Zuganker mit einem Verstellgewinde ausgebildet sind, so daß der Ring über die Gewindeeinstellung der Zuganker auf dem Konus beweglich ist.

Nach Ausführungsbeispielen der Erfindung kann der wenigstens eine sich in Axialrichtung der Kalibrierhülse erstreckende Schlitz einen kurvenförmigen oder auch einen Zick-Zack-förmigen Verlauf aufweisen; auch ein geradliniger Verlauf ist von der Erfindung umfaßt.

Dabei kann vorgesehen sein, daß die Breite des Schlitzes jeweils gleichbleibend bemessen ist oder aber alternativ von dem Beginn des Schlitzes in der Kalibrierhülse zum Austrittsende für das extrudierte Rohr hin anwachsend ausgelegt ist.

Neben der Anordnung eines einzigen Schlitzes kann auch vorgesehen sein, daß mehrere Schlitze in symmetrischer Anordnung über den Umfang der Kalibrierhülse verteilt ausgebildet sind.

Die Schlitze können sich über einen Teil der Längserstreckung der Kalibrierhülse erstrecken oder aber auch über die gesamte Länge der Kalibrierhülse verlaufen.

Nach einem Ausführungsbeispiel der Erfindung ist vorgesehen, daß der Konus durch eine Verringerung der Wandstärke der Wandung der Kalibrierhülse zu deren Austrittsende gebildet ist; alternativ kann vorgesehen sein, daß der Konus von einem auf dem Außenumfang der Kalibrierhülse vorgesehenen Aufsatz gebildet ist.

Zur Erleichterung der Einstellbewegung des Ringes kann vorgesehen sein, daß der Ring an seinem Innendurchmesser mit einer dem Winkel des Konus entsprechenden Anschrägung versehen ist.

In der Zeichnung sind Ausführungsbeispiele der Erfindung wiedergegeben, welche nachstehend beschrieben sind. Es zeigen:
- Fig. 1: eine Kalibrierhülse in einer geschnittenen Seitenansicht,
- Fig. 2: ein anderes Ausführungsbeispiel der Kalibrierhülse in einer schematischen Seitenansicht,
- Fig. 3: ein weiteres Ausführungsbeispiel der Erfindung in einer geschnittenen Stirnansicht,
- Fig. 4: die Kalibrierhülse gemäß Figur 1 in einer detaillierten Darstellung.

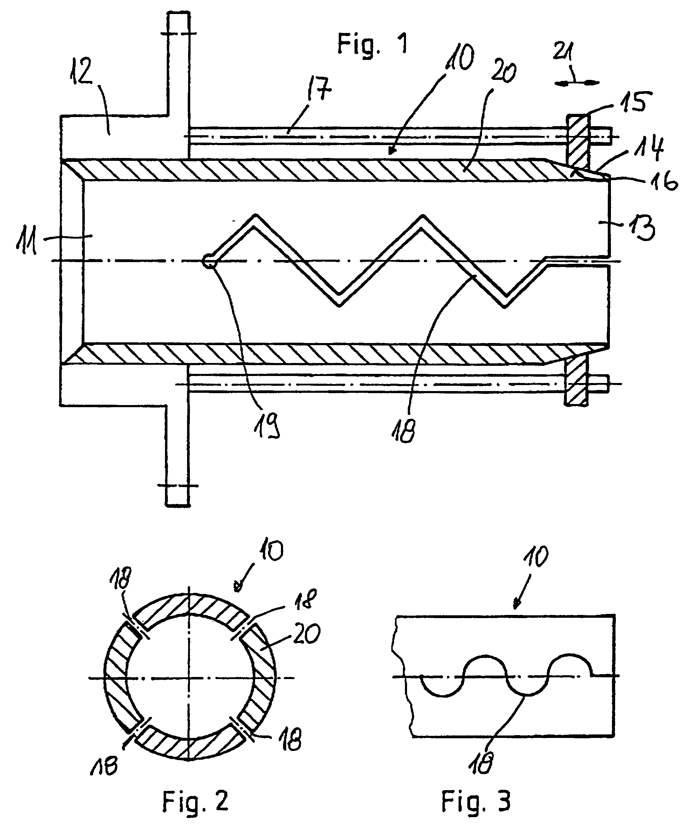

Die in Figur 1 im einzelnen dargestellte Kalibrierhülse 10 hat eine Einlaufseite 11 und ein Austrittsende 13 für das extrudierte Rohr. An ihrer Einlaufseite 11 ist die Kalibrierhülse 10 in einer Halterung 12 gehalten, die in einer geeigneten Weise an die nicht weiter dargestellte Extrudieranlage anzuschließen ist.

Im Bereich des Austrittsendes 13 der Kalibrierhülse 10 ist durch eine entsprechende Verringerung der Wandstärke der Wandung 20 der Kalibrierhülse 10 ein sich in Abzugsrichtung des extrudierten Rohres verengender Konus 14 ausgebildet, auf dem ein Ring 15 gleitend verstellbar angeordnet ist, der zu diesem Zweck mit einer Anschrägung 16 auf dem Konus 14 sitzt. Der Ring 15 ist über parallel zur Kalibrierhülse 10 verlaufende Zuganker 17 mit der Halterung 12 verbunden, so daß über das an den Zugankern 17 ausgebildete Einstellgewinde der Ring 15 in Richtung der Pfeile 21 auf dem Konus 14 verschiebbar bzw. verstellbar ist.

Bei dem dargestellten Ausführungsbeispiel ist ein sich etwa über zwei Drittel der Länge der Kalibrierhülse 10 ausgehend von einem Stopploch 19 erstreckender Schlitz 18 angeordnet, der einen Zick-Zack-förmigen Verlauf aufweist und sich bis zum Austrittsende 13 der Kalibrierhülse 10 erstreckt.

Wird ausgehend von der in Figur 1 dargestellten Stellung des Ringes 15 auf dem Konus 14 der Ring 15 in Richtung der Halterung 12 verstellt, so wird die Kalibrierhülse 10 konzentrisch zusammengedrückt, so daß sich im Austrittsbereich der Kalibrierhülse 10 ein geringerer Innendurchmesser der Kalibrierhülse 10 einstellt, wobei sich die Durchmesserverringerung über die Länge der Kalibrierhülse stufenlos ergibt.

Wie sich aus Figur 2 ergibt, sind unterschiedliche Verläufe des wenigstens einen Schlitzes 18 in der Kalibrierhülse 10 vorstellbar, wobei entsprechend der Darstellung in Figur 3 auch mehrere Schlitze 18 vorgesehen sein können, die in symmetrischer Anordnung über den Umfang der Kalibrierhülse 10 verteilt sind.

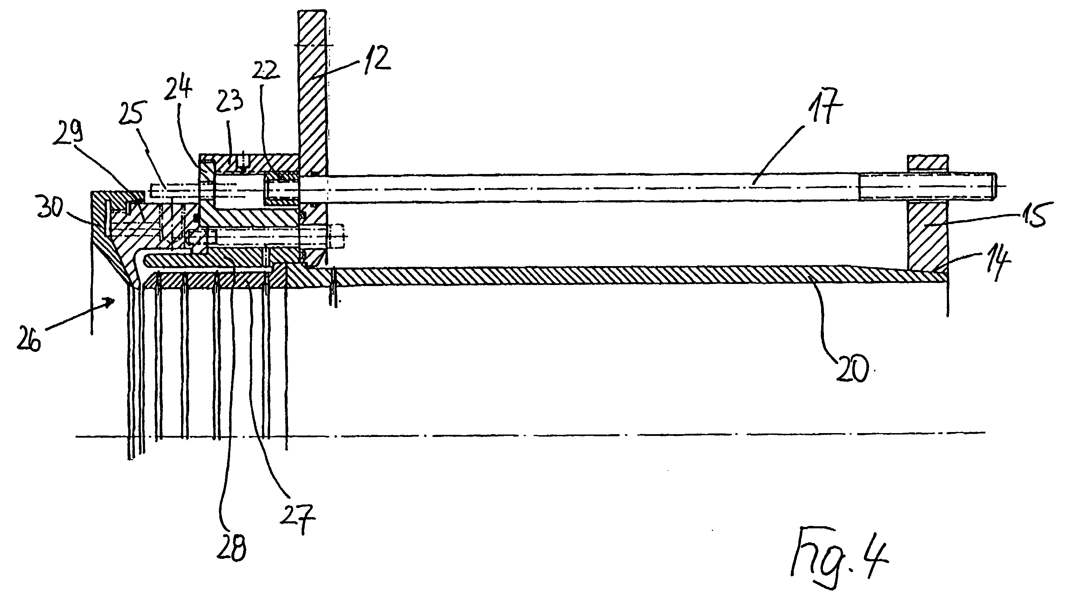

In Figur 4 ist die Einstellung des Innendurchmessers der Kalibrierhülse 10 über die Verschiebung des Ringes 15 auf dem Konus 14 im einzelnen dargestellt. Die über den Umfang der Kalibrierhülse 10 verteilt angeordneten Zuganker 17 sind durch die Halterung 12 hindurchgeführt und in einen auf der Außenseite der Halterung 12 angeordneten umlaufenden Fixierring 22 eingeschraubt. Der Fixierring 22 weist ein Außengewinde auf, auf dem eine Verstellmutter 23 mit einem zugeordneten Innengewinde aufsitzt, die sich axial gegen ein ortsfestes Gegenlager 24 derart abstützt, daß eine Drehung der Verstellmutter 23 eine axiale Verschiebung des Fixierringes 22 bewirkt. In dem Fixierring ist außenseitig zumindest ein Skalenstift 25 angeordnet, der durch das Gegenlager 24 hindurchreicht und die Stellung des Fixierringes und damit auch die Lage des Ringes 15 auf dem Konus 14 anzeigt, so daß über die vorgesehene Skalierung letztlich der jeweils eingestellte Innendurchmesser der Kalibrierhülse ablesbar ist.

Bei dem in Figur 4 dargestellten Ausführungsbeispiel der Kalibrierhülse 10 ist zusätzlich in deren Einlaufbereich 11 eine Vorsatzanordnung 26 ausgebildet, in der einstellbare Wasserkanäle zur Benetzung des in den Einlaufbereich geführten Kunststoffmaterials ausgebildet sind. Die Vorsatzanordnung 26 besteht im einzelnen aus einem in Einlaufrichtung vor der Kalibrierhülse gehalterten Kühlring 27, der gemeinsam mit einem Wasserführungsteil 28 an der Halterung 12 befestigt ist. Ein Einlaufteil 29 schließt den Kühlring 27 einlaufseitig ab. An dem Einlaufteil 29 ist ein weiterer Vorsatzring 30 angeschraubt, der über seinen einstellbaren Abstand zum Einlaufteil 29 einen zusätzlichen Wasserkanal zur Benetzung des Einlaufbereiches der Kalibrierhülse 10 ausbildet.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Kalibrierhülse (10) für den Einsatz in einer Extrudieranlage für Kunststoffrohre mit einer Einrichtung zum stufenlosen Einstellen ihres Innendurchmessers, **dadurch gekennzeichnet, daß** die als einheitlicher rohrförmiger Körper ausgebildete Kalibrierhülse (10) wenigstens einen sich in ihrer Axialrichtung über wenigstens einen Teilabschnitt erstreckenden Schlitz (18) aufweist und die Wandung (20) der Kalibrierhülse (10) an ihrem Austrittsende (13) für das extrudierte Rohr einen sich in Abzugsrichtung des Rohres verengenden Konus (14) aufweist, auf dem ein einen vorgegebenen Durchmesser aufweisender Ring (15) gleitend verstellbar angeordnet ist.

2. Kalibrierhülse nach Anspruch 1, **dadurch gekennzeichnet, daß** zur Verstellung des Ringes (15) auf dem Konus (14) der Kalibrierhülse (10) ein Antrieb vorgesehen ist.

3. Kalibrierhülse nach Anspruch 2, **dadurch gekennzeichnet, daß** der Antrieb für die Verstellung des Ringes (15) als parallel zur Kalibrierhülse (10) angeordnete Zuganker (17) mit einem Verstellgewinde ausgebildet ist.

4. Kalibrierhülse nach einem der Ansprüche 1 bis 3, **dadurch gekennzeichnet, daß** der sich in Axialrichtung der Kalibrierhülse (10) erstreckende Schlitz (18) einen kurvenförmigen Verlauf aufweist.

5. Kalibrierhülse nach einem der Ansprüche 1 bis 3, **dadurch gekennzeichnet, daß** der sich in Axialrichtung der Kalibrierhülse (10) erstreckende Schlitz (18) einen Zick-Zack-förmigen Verlauf aufweist.

6. Kalibrierhülse nach einem der Ansprüche 1 bis 5, **dadurch gekennzeichnet, daß** über den Umfang der Kalibrierhülse (10) verteilt mehrere Schlitze (18) in symmetrischer Anordnung ausgebildet sind.

7. Kalibrierhülse nach einem der Ansprüche 1 bis 6, **dadurch gekennzeichnet, daß** die Schlitze (18) eine gleichbleibende Breite aufweisen.

8. Kalibrierhülse nach einem der Ansprüche 1 bis 6, **dadurch gekennzeichnet**, däß die Breite der Schlitze (18) von deren Beginn in der Kalibrierhülse (10) zum Austrittsende (13) hin anwachsend bemessen ist.

9. Kalibrierhülse nach einem der Ansprüche 1 bis 8, **dadurch gekennzeichnet, daß** sich die Schlitze (18) über die gesamte Länge der Kalibrierhülse (10) erstrecken.

10. Kalibrierhülse nach einem der Ansprüche 1 bis 9, **dadurch gekennzeichnet, daß** der Konus (14) durch eine Verringerung der Wandstärke der Wandung (20) der Kalibrierhülse (10) zu deren Austrittsende (13) gebildet ist.

11. Kalibrierhülse nach einem der Ansprüche 1 bis 9, **dadurch gekennzeichnet, daß** der Konus (14) von einem auf dem Außenumfang.der Kalibrierhülse (10) vorgesehenen Aufsatz gebildet ist.

12. Kalibrierhülse nach einem der Ansprüche 1 bis 11, **dadurch gekennzeichnet, daß** der Ring (15) an seinem Innendurchmesser mit einer dem Winkel des Konus (14) entsprechen den Anschrägung (16) versehen ist.

## Claims

1. A calibration sleeve (10) for use in an extrusion arrangement for plastic pipes having a device for the progressive adjustment of its inside diameter, **characterised in that** the calibration sleeve (10) constructed as a uniform tubular body has at least one slot (18) extending over at least one section in its axial direction and the wall (20) of the calibration sleeve (10) has, at its exit end (13) for the extruded pipe, a cone (14) which narrows in the discharge direction of the pipe and on which a ring (15) having a predetermined diameter is arranged in slidingly adjustable manner.

2. A calibration sleeve according to Claim 1, **characterised in that** a drive is provided for adjusting the ring (15) on the cone (14) of the calibration sleeve (10).

3. A calibration sleeve according to Claim 2, **characterised in that** the drive for adjusting the ring (15) is constructed as tension rods (17) arranged parallel to the calibration sleeve (10) and having an adjustment thread.

4. A calibration sleeve according to one of Claims 1 to 3, **characterised in that** the slot (18) extending in the axial direction of the calibration sleeve (10) has a curved course.

5. A calibration sleeve according to one of Claims 1 to 3, **characterised in that** the slot (18) extending in the axial direction of the calibration sleeve (10) has a zigzagging course.

6. A calibration sleeve according to one of Claims 1 to 5, **characterised in that** a plurality of slots (18) are constructed in a symmetrical arrangement distributed over the periphery of the calibration sleeve (10).

7. A calibration sleeve according to one of Claims 1 to 6, **characterised in that** the slots (18) have a constant width.

8. A calibration sleeve according to one of Claims 1 to 6, **characterised in that** the width of the slots (18) increases from their starting point in the calibration sleeve (10) to the exit end (13).

9. A calibration sleeve according to one of Claims 1 to 8, **characterised in that** the slots (18) extend over the entire length of the calibration sleeve (10).

10. A calibration sleeve according to one of Claims 1 to 9, **characterised in that** the cone (14) is formed by a reduction in the wall thickness of the wall (20) of the calibration sleeve (10) to its exit end (13).

11. A calibration sleeve according to one of Claims 1 to 9, **characterised in that** the cone (14) is formed by an upper part provided on the outer periphery of the calibration sleeve (10).

12. A calibration sleeve according to one of Claims 1 to 11, **characterised in that** the ring (15) is provided along its inside diameter with a chamfer (16) corresponding to the angle of the cone (14).

## Revendications

1. Douille de calibrage (10) pour l'utilisation dans une installation d'extrusion pour tubes en matière plastique avec un dispositif pour le réglage continu de son diamètre intérieur, **caractérisée en ce que** la douille de calibrage (10) formée comme un corps tubulaire unitaire comporte au moins une fente (18) s'étendant dans son sens axial sur au moins une portion partielle, et **en ce que** la paroi (20) de la douille de calibrage (10) comporte, à son extrémité de sortie (13) du tube extrudé, un cône (14) rétréci dans le sens d'éjection du tube sur lequel est placée de manière à se déplacer en coulissant une bague (15) présentant un diamètre prédéterminé.

2. Douille de calibrage selon la revendication 1, **caractérisée en ce qu'**un entraînement est prévu pour le déplacement de la bague (15) sur le cône (14) de la douille de calibrage (10).

3. Douille de calibrage selon la revendication 2, **caractérisée en ce que** l'entraînement pour le déplacement de la bague (15) est conçu comme un tirant d'ancrage (17) disposé parallèlement à la douille de calibrage (10) avec un filet de réglage.

4. Douille de calibrage selon l'une des revendications 1 à 3, **caractérisée en ce que** la fente (18) s'étendant dans le sens axial de la douille de calibrage (10) présente un tracé en forme de courbe.

5. Douille de calibrage selon l'une des revendications 1 à 3, **caractérisée en ce que** la fente (18) s'étendant dans le sens axial de la douille de calibrage (10) présente un tracé en forme de zigzag.

6. Douille de calibrage selon l'une des revendications 1 à 5, **caractérisée en ce que** plusieurs fentes (18) sont réparties sur le pourtour de la douille de calibrage (10), selon une disposition symétrique.

7. Douille de calibrage selon l'une des revendications 1 à 6, **caractérisée en ce que** les fentes (18) présentent une largeur constante.

8. Douille de calibrage selon l'une des revendications 1 à 6, **caractérisée en ce que** la largeur des fentes (18) est dimensionnée de manière croissante depuis leur commencement dans la douille de calibrage (8) jusqu'à l'extrémité de sortie (13).

9. Douille de calibrage selon l'une des revendications 1 à 8, **caractérisée en ce que** les fentes (18) s'étendent sur toute la longueur de la douille de calibrage (10).

10. Douille de calibrage selon l'une des revendications 1 à 9, **caractérisée en ce que** le cône (14) est formé par un rétrécissement de l'épaisseur de la paroi (20) de la douille de calibrage (10) vers l'extrémité de sortie (13) de cette dernière.

11. Douille de calibrage selon l'une des revendications 1 à 9, **caractérisée en ce que** le cône (14) est formé par une garniture prévue sur le pourtour extérieur de la douille de calibrage (10).

12. Douille de calibrage selon l'une des revendications 1 à 11, **caractérisée en ce que** la bague (15) est pourvue, sur son diamètre intérieur, d'une partie oblique (16) correspondant à l'angle du cône (14).
